# DEMANDE DE BREVET EUROPEEN

(11) **EP 3 373 427 A1**
(43) Date de publication de la demande: **12.09.2018**
(21) Numéro de dépôt: 18158654.6
(22) Date de dépôt: 26.02.2018
(51) Int. Cl.: H02K 21/16, H02K 1/27

(54) **MACHINE ÉLECTRIQUE TOURNANTE À CONFIGURATION AMÉLIORÉE**

(30) Priorité: 27.02.2017 FR 1751528
(71) Demandeur: VALEO EQUIPEMENTS ELECTRIQUES MOTEUR, 94046 Créteil Cedex (FR)
(72) Inventeur: WALME, Benoit, 94046 CRETEIL CEDEX (FR); DUARTE, Johnny, 94046 CRETEIL (FR); RAKOTOVAO, Mamy, 94046 CRETEIL CEDEX (FR); DOYARD, Etienne, 94046 CRETEIL CEDEX (FR)

(57) **Abrégé**

L'invention porte principalement sur une machine électrique tournante (10) comprenant:
- un rotor (12) comportant des aimants permanents (39),
- un stator (11) comportant un corps (16) et un bobinage (25) triphasé, caractérisée en ce que
- le couplage des bobines (26) est du type triangle-série, et
- le produit du nombre de spires de chaque bobine (26), de la longueur axiale du corps de stator (16) exprimée en millimètres, et du diamètre interne (L2) du corps de stator (16) exprimé en millimètres est compris entre 38998 et 39142,
- le nombre de spires étant compris entre 23 et 37, la longueur axiale du corps de stator (16) étant comprise entre 17mm et 27mm, et le diamètre interne (L2) du corps de stator (16) étant compris entre 62mm et 67mm.

## Description

La présente invention porte sur une machine électrique tournante à configuration améliorée. L'invention trouve une application particulièrement avantageuse dans le domaine des machines électriques tournantes, telles qu'un alternateur ou un moteur électrique. L'invention pourra être utilisée avantageusement avec un compresseur de fluide réfrigérant de climatiseur pour véhicule automobile.

On connaît des machines électriques comportant un stator et un rotor solidaire d'un arbre assurant la mise en mouvement d'un compresseur à spirale, celle-ci étant désignée sous le nom de "scroll" en anglais. Un tel système comporte deux spirales coopérant entre elles pour pomper et comprimer le fluide réfrigérant. En général, une des spirales est fixe, alors que l'autre se déplace excentriquement sans tourner, de manière à pomper puis emprisonner et comprimer des poches de fluide entre les spires. Un tel système est par exemple décrit dans le document EP1865200.

Le rotor de la machine électrique comporte un corps formé par un empilage de feuilles de tôles maintenues sous forme de paquet au moyen d'un système de fixation adapté. Le rotor comporte des pôles formés par exemple par des aimants permanents situés dans des logements ménagés dans la masse magnétique du rotor. Alternativement, dans une configuration dite à pôles "saillants", les pôles sont formés par des bobines enroulées autour de bras du rotor.

Par ailleurs, le stator comporte un corps réalisé en tôles feuilletées pour diminuer les courants de Foucault. Le corps comporte une paroi annulaire, appelée culasse, et des dents issues de la périphérie interne de la paroi annulaire. Les dents du stator réparties sur la culasse s'étendent vers l'intérieur du stator en direction du rotor. Un entrefer existe entre l'extrémité libre des dents, définissant la périphérie interne du corps du stator, et la périphérie externe du rotor. Les dents définissent avec la culasse des encoches ouvertes vers l'intérieur et destinées à recevoir un bobinage pour formation d'un stator polyphasé par exemple du type triphasé. Ce bobinage pourra par exemple consister en un ensemble de bobines isolées électriquement du corps du stator enroulées chacune autour d'une dent correspondante. On obtient ainsi un bobinage dit de type concentré.

L'invention vise à améliorer la configuration existante d'une telle machine électrique.

A cet effet, l'invention a pour objet une machine électrique tournante comprenant:
- un rotor comportant des aimants permanents,
- un stator comportant:
   - un corps muni de 15 dents, ledit corps ayant une longueur axiale et un diamètre interne, et
   - un bobinage triphasé comportant une pluralité de bobines, chaque bobine formée par une pluralité de spires entourant une dent correspondante,
caractérisée en ce que
- le couplage des bobines est du type triangle-série, et
- le produit du nombre de spires de chaque bobine, de la longueur axiale du corps de stator exprimée en millimètres, et du diamètre interne du corps de stator exprimé en millimètres est compris entre 38998 et 39142,
- le nombre de spires étant compris entre 23 et 37, la longueur axiale du corps de stator étant comprise entre 17mm et 27mm, et le diamètre interne du corps de stator étant compris entre 62mm et 67mm.

Par triangle-série, on entend le fait que les bobines de chaque phase sont montées en série les unes par rapport aux autres et que les ensembles des bobines des phases sont couplés en triangle.

L'invention permet ainsi d'obtenir un compromis optimum entre le rendement et l'encombrement de la machine électrique tournante. L'invention permet en outre de réduire le poids de la machine et de minimiser le niveau de bruit tout en facilitant la réalisation des opérations de bobinage. On facilite également la connexion entre le bobinage et le connecteur du module de puissance en minimisant le nombre de fils de phase à connecter.

Selon une réalisation, le corps de stator présente un diamètre externe de 94mm plus ou moins 20%.

Selon une réalisation, la longueur axiale du corps de stator est de l'ordre de 20mm plus ou moins 20%.

Selon une réalisation, un nombre de spires de chaque bobine est de l'ordre de 32 plus ou moins 20%.

Selon une réalisation, une épaisseur de culasse du stator est de l'ordre de 4.5mm plus ou moins 20%.

Selon une réalisation, un diamètre de fil de chaque bobine est de l'ordre 0.8mm plus ou moins 20%.

Selon une réalisation, le rotor comprend 10 pôles.

Selon une réalisation, le rotor comprend:
- un corps comprenant des dents et des logements entre les dents,
- au moins un aimant permanent positionné dans chaque logement,
- le corps comportant en outre un moyeu destiné à être monté sur un arbre,
- chaque dent comportant au moins deux bras de liaison au moyeu, chaque bras formant une portion d'un bord d'un logement d'un aimant permanent correspondant.

Selon une réalisation, un évidement est formé entre les deux bras d'une même dent.

Selon une réalisation, au moins une dent comprend un trou de fixation apte à recevoir un organe de fixation et en ce qu'un écart entre un bord du trou de fixation et un bord de l'évidement correspondant est constant.

Selon une réalisation, le rotor comporte des moyens de retenue radiale des aimants permanents.

Selon une réalisation, les moyens de retenue radiale sont constitués par des lèvres s'étendant de part et d'autre des dents du rotor.

Selon une réalisation, ladite machine électrique comporte des organes de plaquage des aimants permanents vers les lèvres correspondantes.

Selon une réalisation, chaque organe de placage est positionné dans un logement correspondant entre le moyeu et l'aimant permanent correspondant.

Selon une réalisation, ladite machine électrique tournante est configurée pour fonctionner à une tension inférieure à 350 Volts.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en coupe transversale d'une machine électrique tournante selon la présente invention;
La figure 2 est une vue de côté de la machine électrique tournante selon la présente invention;
La figure 3 est une vue de dessus du stator de la machine électrique tournante selon la présente invention;
La figure 4 est une vue en coupe partielle du stator de la machine électrique tournante selon la présente invention;
La figure 5 est une représentation schématique du couplage en triangle des phases de la machine électrique tournante selon la présente invention;
La figure 6 est une représentation graphique de l'évolution des paramètres de rendement et de longueur axiale du corps de stator de la machine électrique en fonction du nombre de spires pour chaque bobine;
La figure 7 est une vue détaillée illustrant la zone de recouvrement entre un aimant et des bras de liaison du rotor de la machine électrique tournante selon la présente invention;
La figure 8 est une représentation de l'évolution du flux de fuite passant par le bras du rotor et des contraintes mécaniques appliquées sur le paquet de tôles du rotor en fonction de l'épaisseur d'un bras de liaison du rotor.

Les éléments identiques, similaires, ou analogues conservent la même référence d'une figure à l'autre.

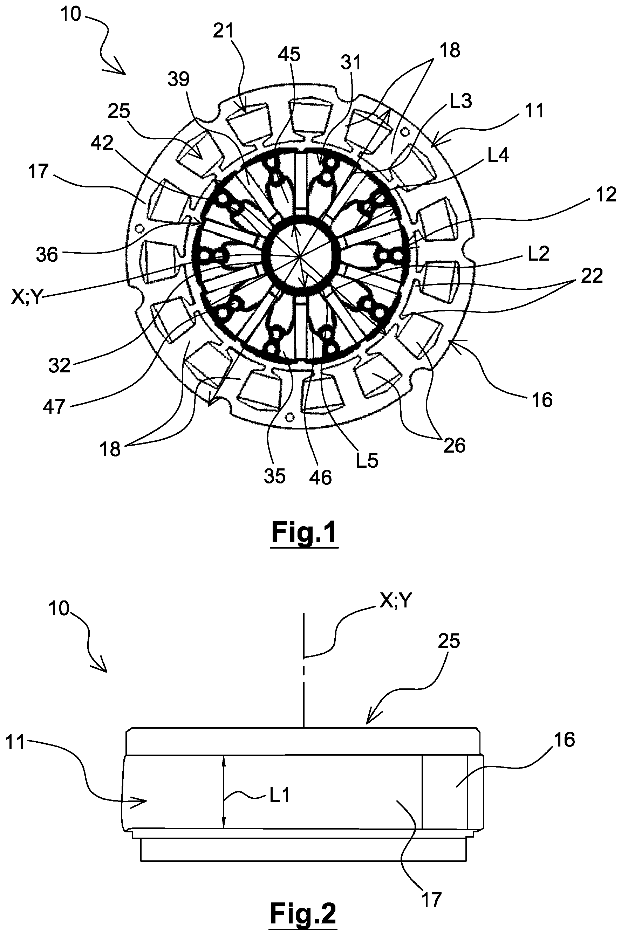

La figure 1 représente une machine électrique tournante 10 comportant un stator 11 polyphasé entourant un rotor 12 d'axe X destiné à être monté sur un arbre (non représenté). Le stator 11 est destiné à être porté par un carter (non représenté) configuré pour porter à rotation l'arbre via des roulements à billes et/ou à aiguilles comme visible par exemple dans le document EP1865200 précité. Cette machine électrique tournante 10 pourra appartenir à un compresseur utilisé pour la compression de fluide réfrigérant de climatiseur de véhicule automobile. En variante, la machine 10 pourra fonctionner en mode alternateur. De préférence, la machine électrique tournante 10 est avantageusement configurée pour fonctionner à une tension inférieure à 350 Volts.

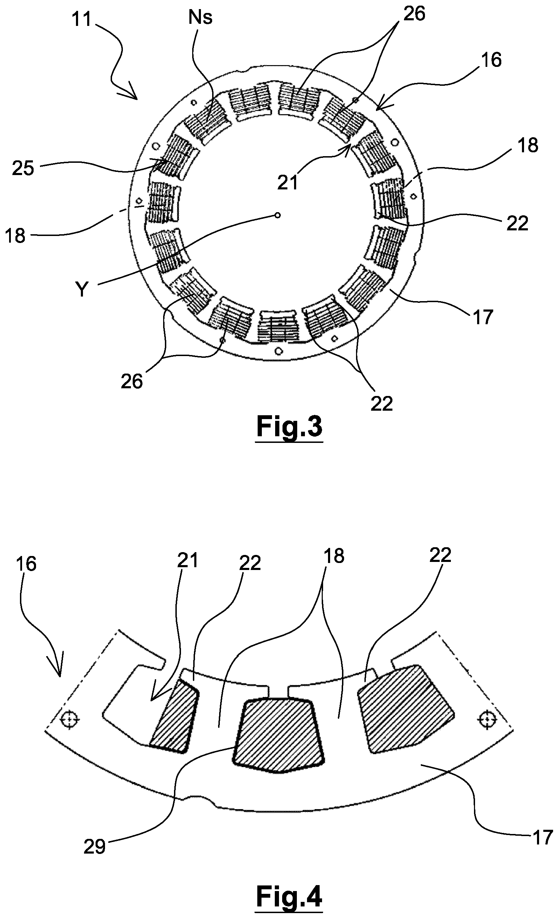

Comme on peut le voir sur la figure 3, le stator 11 présente un axe Y destiné à être confondu avec l'axe X du rotor 12 lorsque la machine 10 est dans un état assemblé. Le stator 11 comporte un corps 16 sous la forme d'un paquet de tôles feuilletées présentant à sa périphérie externe une paroi annulaire 17, appelé culasse, et des dents 18 issues de la périphérie interne de la culasse 17, tel que cela est représenté sur la figure 4. Ces dents 18 sont réparties circonférentiellement de manière régulière et s'étendent vers l'intérieur en direction du rotor 12, tel qu'un rotor à aimants permanents décrit plus en détails ci-après.

Les dents 18 délimitent deux à deux des encoches 21, deux encoches 21 successives étant ainsi séparées par une dent 18. Ces dents 18 présentent chacune à leur extrémité libre deux rebords 22 s'étendant circonférentiellement de part et d'autre de la dent 18. Les extrémités libres des dents 18 délimitent, de manière connue, un entrefer avec la périphérie externe du rotor 12 de la machine électrique tournante 10.

Le stator 11 comporte en outre un bobinage 25 triphasé comportant une pluralité de bobines 26 pour former les différents pôles du stator 11. Chaque bobine 26 est formée par une pluralité de spires entourant une dent 18 correspondante. Les bobines 26 sont réalisées en sorte qu'une même encoche 21 reçoit deux demi-bobines. On obtient ainsi un bobinage 25 dit de type concentré.

Les fils des bobines 26, tels que des fils en cuivre ou en aluminium recouverts d'une couche électriquement isolante, comme par exemple de l'émail, sont enroulés chacun autour d'une dent 18. Cette opération de bobinage 25 pourra par exemple être effectuée à l'aide d'une aiguille centralement creuse pour permettre un passage d'un ou plusieurs fils en parallèles formant la bobine 26. Cette aiguille se déplace circonférentiellement, axialement, et radialement par rapport au stator 11. Le bobinage 25 pourra être réalisé in situ, c'est-à-dire directement autour des dents 18 du stator 11. Alternativement, le bobinage 25 pourra être réalisé sur des dents 18 rapportées qui sont ensuite fixées sur la culasse du stator 11 via un système de liaison adapté.

De préférence, le stator 11 est équipé d'isolants d'encoche 29 prenant par exemple la forme d'une membrane fine, réalisée dans un matériau électriquement isolant et conducteur de chaleur. Cette membrane fine est pliée, en sorte que chaque isolant d'encoche 29 est intercalé entre une bobine 26 et les parois internes des encoches 21 du stator 11.

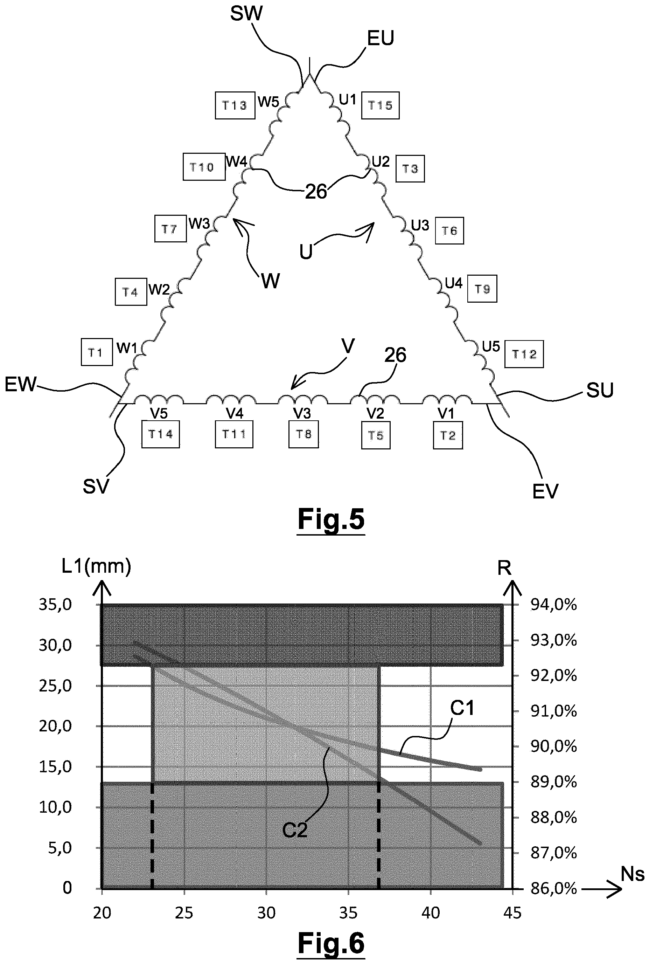

Comme cela est illustré sur la figure 5, on distingue parmi les bobines 26, les bobines Ui utilisées pour former la phase U de la machine, les bobines Vi utilisées pour former la phase V de la machine, ainsi que les bobines Wi utilisées pour former la phase W de la machine, pour i allant de 1 à N. N vaut en l'occurrence 5 mais pourrait en variante avoir une valeur supérieure ou inférieure tout en restant au moins égale à deux.

Plus précisément, Tj correspond à une dent 18 du stator 11 avec j allant de 1 à 15 pour un stator à 15 dents. Les bobines sont associées alternativement aux différentes phases du stator 11. Ainsi, pour un système à trois phases U, V, W, la bobine de la dent T1 est associée à la phase W, la bobine de la dent T2 est associée à la phase V, la bobine de la dent T3 est associée à la phase U, et ainsi de suite. On retrouve ainsi les bobines 26 associées à une même phase toutes les K dents, K étant le nombre de phases ici égal à trois.

En outre, les bobines 26 de chaque phase U, V, W sont branchées électriquement en série. Ainsi, les bobines U1, U2, U3, U4, U5 de la phase U sont branchées électriquement en série. Les bobines V1, V2, V3, V4, V5 de la phase V sont branchées électriquement en série. Et les bobines W1, W2, W3, W4, W5 de la phase W sont branchées électriquement en série.

Les phases U, V, W de la machine 10 sont avantageusement couplées en triangle. Ainsi, l'entrée EU de la phase U est connectée avec la sortie SW de la phase W. L'entrée EW de la phase W est connectée avec la sortie SV de la phase V. L'entrée EV de la phase V est connectée avec la sortie SU de la phase U.

Afin d'augmenter le rendement de la machine 10, il est nécessaire de réduire sa résistance en augmentant la section bobinable, ainsi que le nombre de spires Ns de chaque bobine 26 et la longueur axiale L1 du corps de stator 16 (cf. figure 2). A iso-taux de remplissage, la réduction du nombre de spires Ns correspond à une augmentation du diamètre de fil. Par ailleurs, pour améliorer la compacité de la machine 10, il est nécessaire de réduire la longueur L1 du corps de stator 16 tout en conservant le même couple. A cet effet, il est nécessaire d'augmenter le nombre de spires Ns.

Afin d'optimiser le compromis entre le rendement et la compacité en ayant un rendement supérieur ou égal à 89% et une longueur axiale L1 du corps de stator 16 inférieure ou égale à 27mm, le produit du nombre de spires Ns de chaque bobine 26, de la longueur axiale L1 du corps de stator 16 exprimée en millimètres, et du diamètre interne L2 du corps de stator 16 exprimé en millimètres, soit le produit NsxL1XL2, est compris entre 38998 et 39142.

De préférence, le nombre de spires Ns est compris entre 23 et 37, la longueur axiale L1 du corps de stator 16 est comprise entre 17mm et 27mm, et le diamètre interne L2 du corps de stator 16 est compris entre 62mm et 67mm.

Le tableau ci-dessous présente des exemples de valeurs pour un diamètre interne L2 du corps de stator 16 valant 62mm:

| Numéro de ligne | Nombre de spires Ns | Longueur L1 | Rendement R |
|---|---|---|---|
| 1 | 22 | 28,7 | 92,9% |
| 2 | 25 | 25,2 | 92,2% |
| 3 | 28 | 22,5 | 91,5% |
| 4 | 31 | 20,3 | 90,7% |
| 5 | 34 | 18,5 | 89,9% |
| 6 | 37 | 17,0 | 89,1% |
| 7 | 40 | 15,8 | 88,2% |
| 8 | 43 | 14,7 | 87,3% |

Les courbes C1 et C2 correspondant respectivement à la longueur L1 et au rendement R sont représentées en figure 6. On observe que les valeurs de la première ligne ne correspondent pas à une configuration acceptable car elles ne permettent pas de respecter le critère de compacité (L1 supérieur à 27mm). Par ailleurs, les valeurs des lignes 7 et 8 ne permettent pas de respecter le critère de rendement imposé (R inférieur à 89%).

Le tableau ci-dessous présente des exemples de valeurs pour un diamètre interne L2 du corps de stator 16 valant 67mm:

| Numéro de ligne | Nombre de spires Ns | Longueur L1 | Rendement R |
|---|---|---|---|
| 1 | 17 | 34,3 | 93,4% |
| 2 | 20 | 29,2 | 92,6% |
| 3 | 23 | 25,4 | 91,7% |
| 4 | 26 | 22,4 | 90,8% |
| 5 | 29 | 20,1 | 89,8% |
| 6 | 32 | 18,2 | 88,8% |
| 7 | 35 | 16,7 | 87,7% |
| 8 | 38 | 15,4 | 86,6% |

On observe que les valeurs des lignes 1 et 2 ne correspondent pas à des configurations acceptables, car elles ne permettent pas de respecter le critère de compacité (L1 supérieur à 27mm). Par ailleurs, les valeurs des lignes 6, 7, et 8 ne permettent pas de respecter le critère de rendement (R inférieur à 89%).

Dans un exemple de réalisation particulier, le corps de stator 16 présente un diamètre externe L3 de 94mm plus ou moins 20%. La longueur axiale L1 du corps de stator 16 est de l'ordre de 20mm plus ou moins 20%. Le nombre de spires Ns de chaque bobine 26 est de l'ordre de 32 plus ou moins 20%. Une épaisseur de la culasse 17 du stator 11 est de l'ordre de 4.5mm plus ou moins 20%. Le diamètre de fil de chaque bobine 26 est de l'ordre 0.8mm plus ou moins 20%.

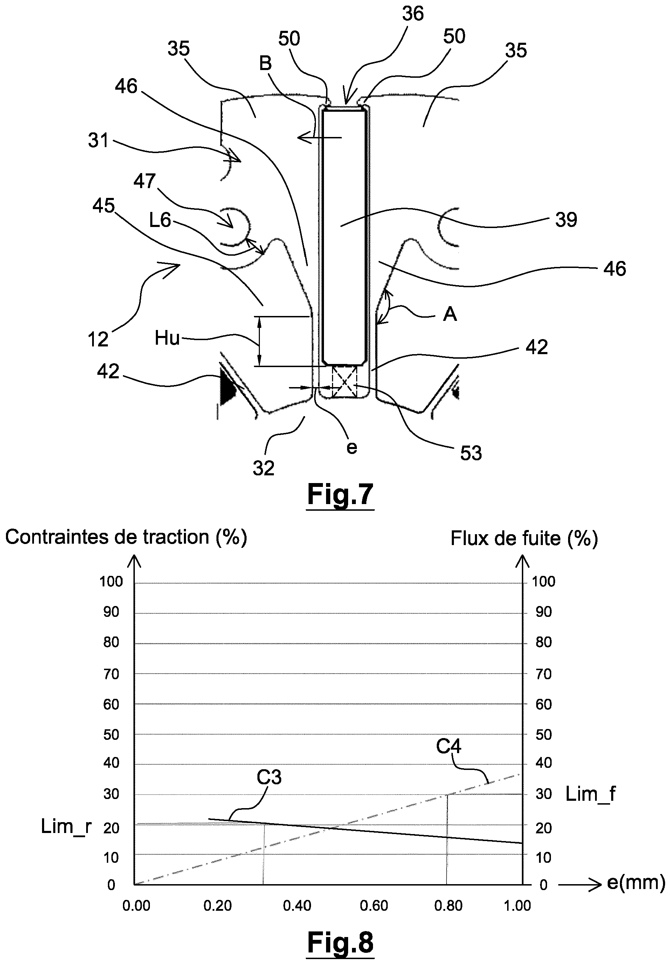

Par ailleurs, comme cela est visible sur les figures 1 et 7, le rotor 12 d'axe X comporte un corps 31 formé par un paquet de tôle feuilletée constitué par un empilement axial de tôles ferromagnétiques. Le corps de rotor 31 comprend un moyeu 32 monté sur l'arbre de la machine et des dents 35 s'étendant radialement par rapport au moyeu 32. Des logements 36 sont situés entre les dents 35. Chaque logement 36 est délimité par deux dents 35 consécutives, de sorte qu'il existe une alternance circonférentielle entre les dents 35 et les logements 36.

Au moins un aimant permanent 39 est positionné dans chaque logement 36. Ainsi, il sera possible d'utiliser un aimant 39 unique positionné à l'intérieur d'un logement 36 correspondant, ou deux aimants 39 ou même plus de deux aimants par logement 36 empilés axialement les uns sur les autres.

Les aimants 39 s'étendent radialement par rapport à l'axe X du rotor 12. On obtient ainsi une configuration de rotor 12 à concentration de flux, les faces latérales en vis-à-vis de deux aimants 39 consécutifs étant de même polarité. Les aimants 39 sont de préférence en terre rare. En variante, les aimants 39 sont en ferrite selon les applications et la puissance recherchée de la machine électrique tournante 10. En l'occurrence, le rotor 12 comporte dix logements 36 et donc dix pôles.

Par ailleurs, chaque dent 35 comporte deux bras 42 de liaison au moyeu 32, tel que cela est bien visible sur la figure 7. Chaque bras 42 forme une portion d'un bord de logement 36 d'un aimant 39 correspondant. Chaque bras 42 comprend une partie de recouvrement avec un aimant 39 correspondant à la partie du bras 42 en vis-à-vis de l'aimant 39 ayant une longueur radiale Hu et une épaisseur e mesurée suivant une direction orthoradiale par rapport à l'axe X.

De préférence, afin d'obtenir un compromis optimum entre les performances magnétiques et la rigidité mécanique du rotor 12, le rapport entre la longueur radiale Hu et l'épaisseur e d'un bras 42 est compris entre 1,8 divisé par le champ B de l'aimant 39 correspondant et 2,16 divisé par le champ B de l'aimant 39 correspondant.

Sur la figure 8 où les courbes C3 et C4 représentent respectivement l'évolution des contraintes mécaniques appliquées sur le paquet de tôles du rotor et l'évolution du flux de fuite, l'épaisseur e d'un bras 42 est comprise entre 0.3mm et 0.8mm afin de respecter la limite à la rupture du paquet de tôle Lim_r et le flux de fuite maximum admissible Lim_f.

En outre, un évidement 45 est formé entre les deux bras 42 d'une même dent 35 correspondante. La dent 35 comprend une portion évasée 46 s'étendant dans le prolongement de chaque bras 42 formant une face de l'évidement 45. Cette face forme un angle A avec une face du bras 42 formant une autre face de l'évidement 45 correspondant d'au moins 150°.

Dans un exemple de réalisation, le rotor 12 présente un diamètre externe L4 compris entre 60mm et 70mm et un diamètre interne L5 comprise entre 15 et 20mm (cf. figure 1). L'épaisseur de chaque bras 42 est comprise entre 0,4 et 0.6mm, et vaut de préférence de l'ordre de 0.5mm. La longueur du recouvrement utile Hu est comprise entre 0.7mm et 4.2mm.

Dans l'exemple représenté sur les figures 1 et 7, chaque dent 35 comprend en outre un trou de fixation 47 apte à recevoir un organe de fixation, tel qu'un rivet, pour maintenir ensemble les tôles du rotor 12. Afin d'optimiser le passage du flux dans la dent 35, un écart L6 mesuré dans un plan perpendiculaire à l'axe X entre un bord du trou de fixation 47 et un bord de l'évidement 45 correspondant est constant. En variante, certaines dents 35 du rotor 12 comportent un trou de fixation 47 mais pas toutes.

En outre, des lèvres 50 sont implantées du côté de l'extrémité libre de chaque dent 35. Ces lèvres 50 s'étendent de part et d'autre de chaque dent 35. Ces lèvres 50 constituent ainsi des moyens de retenue radiale des aimants 39. En variante, les logements 36 pour les aimants 39 pourront être fermés à leur périphérie externe.

Des organes de plaquage 53, tel que des ressorts plats, assurent le plaquage des aimants 39 vers les lèvres 50 correspondantes, tel que cela est illustré par la figure 7. Chaque organe de placage 53 est positionné dans un logement 36 correspondant entre le moyeu 32 et l'aimant 39 correspondant.

Bien entendu, la description qui précède a été donnée à titre d'exemple uniquement et ne limite pas le domaine de l'invention dont on ne sortirait pas en remplaçant les différents éléments par tous autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Machine électrique tournante (10) comprenant:
- un rotor (12) comportant des aimants permanents (39),
- un stator (11) comportant:
- un corps (16) muni de 15 dents (18), ledit corps (16) ayant une longueur axiale (L1) et un diamètre interne (L2), et
- un bobinage (25) triphasé comportant une pluralité de bobines (26), chaque bobine (26) formée par une pluralité de spires entourant une dent (18) correspondante,
**caractérisée en ce que**
- le couplage des bobines (26) est du type triangle-série, et
- le produit du nombre de spires (Ns) de chaque bobine (26), de la longueur axiale (L1) du corps de stator (16) exprimée en millimètres, et du diamètre interne (L2) du corps de stator (16) exprimé en millimètres est compris entre 38998 et 39142,
- le nombre de spires (Ns) étant compris entre 23 et 37, la longueur axiale (L1) du corps de stator (16) étant comprise entre 17mm et 27mm, et le diamètre interne (L2) du corps de stator (16) étant compris entre 62mm et 67mm.

2. Machine électrique tournante selon la revendication 1, **caractérisée en ce que** le corps de stator (16) présente un diamètre externe (L3) de 94mm plus ou moins 20%.

3. Machine électrique tournante selon la revendication 1 ou 2, **caractérisée en ce que** la longueur axiale (L1) du corps de stator (16) est de l'ordre de 20mm plus ou moins 20%.

4. Machine électrique tournante selon l'une quelconque des revendications 1 à 3, **caractérisée en ce qu'**un nombre de spires (Ns) de chaque bobine (26) est de l'ordre de 32 plus ou moins 20%.

5. Machine électrique tournante selon l'une quelconque des revendications 1 à 4, **caractérisée en ce qu'**une épaisseur de culasse du stator (11) est de l'ordre de 4.5mm plus ou moins 20%.

6. Machine électrique tournante selon l'une quelconque des revendications 1 à 5, **caractérisée en ce qu'**un diamètre de fil de chaque bobine (26) est de l'ordre 0.8mm plus ou moins 20%.

7. Machine électrique tournante selon l'une quelconque des revendications 1 à 6, **caractérisée en ce que** le rotor (12) comprend 10 pôles.

8. Machine électrique tournante selon l'une quelconque des revendications 1 à 7, **caractérisée en ce que** le rotor (12) comprend:
- un corps (31) comprenant des dents (35) et des logements (36) entre les dents (35),
- au moins un aimant permanent (39) positionné dans chaque logement (36),
- le corps (31) comportant en outre un moyeu (32) destiné à être monté sur un arbre,
- chaque dent comportant au moins deux bras (42) de liaison au moyeu (32), chaque bras (42) formant une portion d'un bord d'un logement (36) d'un aimant permanent (39) correspondant.

9. Machine électrique tournante selon la revendication 8, **caractérisée en ce qu'**un évidement (45) est formé entre les deux bras (42) d'une même dent.

10. Machine électrique tournante selon la revendication 9, **caractérisée en ce qu'**au moins une dent (35) comprend un trou de fixation (47) apte à recevoir un organe de fixation et **en ce qu'**un écart (L6) entre un bord du trou de fixation (47) et un bord de l'évidement (45) correspondant est constant.

11. Machine électrique tournante selon l'une quelconque des revendications 8 à 10, **caractérisée en ce que** le rotor (12) comporte des moyens de retenue radiale des aimants permanents (39).

12. Machine électrique tournante selon la revendication 11, **caractérisée en ce que** les moyens de retenue radiale sont constitués par des lèvres (50) s'étendant de part et d'autre des dents (35) du rotor (12).

13. Machine électrique tournante selon l'une quelconque des revendications 8 à 12, **caractérisée en ce qu'**elle comporte des organes de plaquage (53) des aimants permanents (39) vers les lèvres (50) correspondantes.

14. Machine électrique tournante selon l'une quelconque des revendications 8 à 13, **caractérisée en ce que** chaque organe de placage (53) est positionné dans un logement (36) correspondant entre le moyeu (32) et l'aimant permanent (39) correspondant.

15. Machine électrique tournante selon l'une quelconque des revendications 1 à 14, **caractérisée en ce qu'**elle est configurée pour fonctionner à une tension inférieure à 350 Volts.
